# EUROPÄISCHE PATENTSCHRIFT

(11) **EP 1 319 265 B1**
(45) Veröffentlichungstag und Bekanntmachung des Hinweises auf die Patenterteilung: **20.07.2005**
(21) Anmeldenummer: 01976241.8
(22) Anmeldetag: 19.09.2001
(51) Int. Cl.: H02H 9/04

(54) **SCHUTZSCHALTUNG**
PROTECTIVE CIRCUIT
CIRCUIT DE PROTECTION

(30) Priorität: 22.09.2000 DE 10047114
(43) Veröffentlichungstag der Anmeldung: 18.06.2003
(73) Patentinhaber: Pepperl + Fuchs GmbH, 68307 Mannheim (DE)
(72) Erfinder: FEY, Wilhelm, 67246 Dirmstein (DE); KRAUSE, Ernst, 68723 Oftersheim (DE)
(74) Vertreter: Heim, Hans-Karl, Dipl.-Ing.
(86) Internationale Anmeldenummer: PCT/EP2001/010842
(87) Internationale Veröffentlichungsnummer: WO 2002/027888

(56) Entgegenhaltungen:
- DE-A- 19 850 397
- US-A- 5 179 488

## Beschreibung

Die Erfindung betrifft eine Schutzschaltung zur Spannungsbegrenzung für eine zu schützende Einrichtung, insbesondere einen Verbraucher mit vorgeschalteter Spannungs- und Strombegrenzungseinrichtung, nach dem Oberbegriff des Anspruchs 1.

Schutzschaltungen dieser Art sind aus der EP 0 359 912 A1, der EP 0 310 280 B1 oder der DE-PS 36 22 268 bekannt. Diese bekannten Schutzschaltungen haben verschiedene Nachteile. So muss beispielsweise nach dem Ansprechen der entsprechenden Sicherungseinrichtung bei der EP 0 359 912 A1 manuell eine Sicherung ausgewechselt werden. Die Schaltungen der DE-PS 36 22 268 und der EP 0 310 280 B1 weisen den Nachteil auf, dass dort hohe Querströme gezogen werden und dass außerdem im Arbeitsbereich ein unerwünschter Spannungsabfall auftritt. Ein weiterer Nachteil ist, dass im Fehlerfall auch eine hohe Verlustleistung auftreten kann.

In der nicht vorveröffentlichten PCT-Anmeldung WO 00/62394 A1 schafft man zwar eine Lösung für die vorausgehend genannten Probleme, indem man der Sicherungseinrichtung für den Verbraucher eine Schutzschaltung vorordnet, welche ein schnelles Ansprechverhalten zeigt, so dass im Falle einer Überspannung bzw. eines zu hohen Stromes ein rasches Abschalten der nachgeordneten Schaltungen möglich wird. Als Schalter verwendet man hierbei jedoch einen FET, der im Längszweig zwischen dem einen Eingangsanschluss der Schutzschaltung und der nachgeordneten Sicherungseinrichtung vorgesehen ist.

Bei der Verwendung eines FET sind die Beschaltungsmöglichkeiten und die Anordnung in der Schutzschaltung aber begrenzt und relativ unflexibel, so dass Verbesserungen hierzu denkbar sind.

In der DE 38 04 250 C1 ist eine Schaltungsanordnung zur Strombegrenzung, insbesondere für den Einsatz bei digitalen Endgeräten, beschrieben. Dabei ist zum Abschalten einer Spannung in einem Längszweig der Schaltungsanordnung die Source-Drain-Strecke eines Feldeffekttransistors angeordnet, dessen Durchgang über sein Gate in Abhängigkeit sowohl von der Durchsteuerung eines Transistors als auch von der Ladung eines Kondensators gesteuert wird.

Die DE 296 13 790 U1 betrifft einen mikromechanisch gefertigten Mikroschalter, bei dem, vergleichbar einem Reed-Kontakt, eine Schaltbewegung durch ein auf einen elastischen biegbaren Träger einwirkendes Magnetfeld bewirkt werden kann.

In der DE 41 00 634 A1 ist eine Prüfvorrichtung für IC's, insbesondere in bestückten Leiterplatten, offenbart, bei der zur Verbindung einzelner Prüfpunkte eines Prüflings mit unterschiedlichen Prüfkanälen eine Mehrzahl von Mikro-Relais vorgesehen ist.

Der vorliegenden Erfindung liegt daher die **Aufgabe** zugrunde, eine Schutzschaltung zur Spannungsbegrenzung für eine zu schützende Einrichtung, insbesondere einen Verbraucher mit vorgeschalteter Spannungs- und Strombegrenzungseinrichtung, zu schaffen, die entsprechend den Schaltungsanforderungen flexibel ausgelegt werden kann, die vernachlässigbare Längsspannungsabfälle und Querströme aufweist und die insbesondere eine geeignete Schutzfunktion für eine einem Verbraucher vorgeschaltete Zener-Barriere bilden kann.

Diese Aufgabe wird erfindungsgemäß durch eine Schutzschaltung mit den Merkmalen des Patentanspruchs 1 gelöst.

Eine gattungsgemäße Schutzschaltung ist erfindungsgemäß dadurch weitergebildet, dass die Schalteinrichtung ein mikromechanisches Bauteil ist, welches einen Steuerkreis mit einem hohen Eingangswiderstand und einen vom Steuerkreis galvanisch getrennten Ausgangskreis aufweist, der über den Steuerkreis schaltbar ist, wobei der Ausgangskreis in geöffnetem Schaltzustand eine galvanische Trennung seiner Ausgangsanschlüsse aufweist.

Ein Kerngedanke der Erfindung liegt daher darin, den erforderlichen Schalter nicht als bipolaren Transistor, als FET oder dergleichen auszulegen, sondern ein mikro-mechanisches Bauteil mit hohem Eingangswiderstand und galvanischer Trennung von Ausgangs- und Steuerkreis zu wählen, das beim Abschalten bzw. Öffnen des Schalters eine galvanische Trennung der Ausgangsanschlüsse aufweist.

Zweckmäßigerweise wird das mikro-mechanische Bauteil bzw. Bauelement in Form eines Mikro-Relais auf der Basis von Materialien und Verfahren realisiert, wie sie in der Mikro-Mechanik und/oder bei der Halbleiterherstellung üblich sind.

Insbesondere wird hierfür in sehr vorteilhafter Weise ein Mikro-Relais zum Beispiel auf Siliziumbasis gewählt, dass einen geeigneten Schichtaufbau zum Beispiel ähnlich dem bei Halbleiter-Bauelementen haben kann, und dessen Schichten verfahrenstechnisch so strukturiert sind, dass das eigentlich schaltende mechanische Element durch elektrostatische oder piezoelektrische Kräfte, also Ladungsveränderung, betätigbar ist. Im Hinblick auf die Kontaktgabe bzw. das Öffnen der Kontakte kann dieses Silizium-Mikro-Relais also ähnlich der Art einer Blattfederfunktion, eines Biegebalkens o.ä. arbeiten. Im US-Patent US-5,638,946 ist ein solches Relais beispielhaft beschrieben.

Als Spannungsfühler-Einrichtung kann eine Spannungsfühler-Diode, insbesondere eine Zener-Diode, ein Leistungsfühler oder ein Temperaturfühler, beispielsweise ein temperaturveränderlicher Widerstand, z.B. ein Thermistor, eingesetzt werden. Bei einer bevorzugten Schaltungsauslegung ist dem elektronischen Schalter (T1) mindestens ein Arbeitswiderstand (Rc) und der Spannungsfühler-Diode (Dz) mindestens ein Widerstand (Rb) zugeordnet, und der Steueranschluss des elektronischen Schalters (T1) steht mit dem Widerstand (Rb) und der Spannungsfühler-Diode (Dz) in Wirkverbindung.

Ein gravierender Vorteil in der Flexibilität der Schaltungsauslegung ist hierbei die galvanische Trennung beim Mikro-Relais zwischen seinem Steuerkreis und den Anschlüssen des Lastkreises sowie die hohe Eingangsimpedanz des Steuerkreises. Aufgrund seiner Mikrostruktur kann dieses Mikro-Relais auch in einer integrierten Ausführung mit der weiteren Elektronik realisiert werden, wobei auch eine Baugruppe als SMD oder auch eine Realisierung in Art eines Chips denkbar ist.

Es besteht aber auch je nach Einsatzzweck die Möglichkeit, externe Bauelemente zum Mikro-Relais vorzusehen oder die erforderlichen Bauelement direkt als Baugruppe mit dem Mikro-Relais zu verwirklichen.

Sehr vorteilhaft ist beim Mikro-Relais auch die hohe Vibrationsfestigkeit, was die Fehlerwahrscheinlichkeit reduziert. Ganz wesentlich jedoch ist bei der Wahl des Schalters als Mikro-Relais die Tatsache, dass es sehr flexibel den entsprechenden Anforderungen angepasst werden kann, das heißt bei einer vorhandenen Spannungs- bzw. Stromfühleinrichtung entsprechend den Ausgangserfordernissen für die nachgeschalteten Verbraucher, mit einem hohen Freiheitsgrad in der Schaltung plaziert werden kann.

So ist das Mikro-Relais mit seinen Steueranschlüssen auch direkt über eine Kollektor-Emitter- oder Kollektor-Basis-Strecke bzw. Drain-Source- oder Drain-Gate-Strecke eines Transistors ansteuerbar. Die Integration eines Mikro-Relais in bestehende Schaltungen kann bei der richtigen Bewertung der Eigenschaften des Mikro-Relais üblicherweise relativ einfach erfolgen. Im Vergleich zu einem als Schalter eingesetzten FET wird die Spannung am Ausgang ohne zusätzliche Beschaltung zum Erreichen einer Hysterese in einer Art Kippfunktion abgeschaltet. Mittels einer Schutzschaltung mit Mikro-Relais als Schalter können daher in hervorragender Weise Schaltungen gegen Überspannung und Überlast, auch mit Selbsthaltung, realisiert werden.

Der ganz erhebliche Vorteil des Einsatzes einer entsprechenden Mikro-Einrichtung bzw. eines Mikro-Relais als Schalter in einer Schutzschaltung ist die erhebliche Vereinfachung beim Bauteilaufwand zur Ansteuerung des Mikro-Relais. Diese Vereinfachung kann in entsprechenden Fällen so weit führen, dass das Mikro-Relais alleine, ohne weitere vorgeschaltete Bauelemente, die Ansprechfunktion und Abschaltfunktion für den nachfolgenden Verbraucher übernimmt.

Die Erfindung ermöglicht daher in vereinfachter Weise eine Detektoreinrichtung für Überspannung und Überlast, die als Kernzelle in der Schutzschaltung den Schalter des entsprechenden Mikro-Relais betätigt. Diese Kernzelle kann mit Erweiterungszellen zur Einstellung bzw. Justierung von Parametern der Kernzelle ausgestattet sein. Hierbei kann auch der Eigenschutz des Mikro-Relais gegen Überspannung miteinbezogen sein. Ein derartiger Aufbau der Schutzschaltung ermöglicht eine hohe Flexibilität im Hinblick auf die Auslegung mit Schalttransistoren vom npn-Typ bzw. pnp-Typ oder als FET.

Je nach den Erfordernissen kann das Mikro-Relais als "Schließer" bzw. "Öffner" ausgelegt sein.

Insbesondere durch das sehr kurze Ansprechverhalten, den hohen Eingangswiderstand und die hohe Schaltfrequenz ermöglicht das Mikro-Relais sozusagen auch den Schutz einer einem Verbraucher oder Messwertgeber vorgeschalteten Spannungs-StromBegrenzungseinrichtung, die üblicherweise als Zener-Barriere aufgebaut ist. Mit anderen Worten zeigt eine entsprechende Schutzschaltung ein schnelleres Abtrennen als z.B. eine nachgeschaltete Zener-Barriere, so dass auch Baugruppen des Ex-Bereiches abgesichert werden können.

Die Erfindung ist nachfolgend anhand schematischer Beispiele noch näher erläutert. Hierbei zeigt:
- Fig. 1: zwei Varianten einer Kernzelle mit pnp- bzw. npn-Transistor;
- Fig. 2: eine Erweiterungszelle zum Ausbau der Grundschaltung mit einer Kernzelle nach Fig. 1;
- Fig. 3: das Funktionsprinzip der erfindungsgemäßen Schutzschaltung mit Kernzellen in zwei Ausführungsformen und Erweiterungszellen, anhand derer die verschiedenen Varianten der Schutzschaltung durch wahlweises Verwenden der gezeigten Elemente abgeleitet werden können;
- Fig. 4: ein Ausführungsbeispiel der Schaltung mit einer Kernzelle mit npn-Transistor und einem MikroRelais MR1 als Schließer am Ausgang;
- Fig. 5: eine weitere Ableitung aus Fig. 3 mit einem npn-Transistor, wobei ein Steueranschluss des Mikro-Relais auf die Basis des Transistors statt seines Emitters wie in Fig. 3 geführt ist;
- Fig. 6: eine andere Ausführungsform der Schutzschaltung mit einem Mikro-Relais als Öffner;
- Fig. 7: eine weitere Variation der Kernzelle mit pnp-Transistor und eine zum Eigenschutz des Mikro-Relais MR1 vorgesehene parallel zum Mikro-Relais liegende Z-Diode;
- Fig. 8: eine weitere Ausführungsform der Schutzschaltung, in der die Ausgangsspannung über einen Widerstand Rh als Hysterese-Widerstand auf die Basis des Transistors der Kernzelle zurückgekoppelt ist;
- Fig. 9': die einfachste Ausführungsform der Schutzschaltung mit einem Mikro-Relais, wie sie bei entsprechender Parameteranpassung möglich ist, und
- Fig. 10: eine Schutzschaltung mit Mikro-Relais mit nachgeschalteter Spannungs-Strom-Begrenzungseinrichtung und nachfolgender Last.

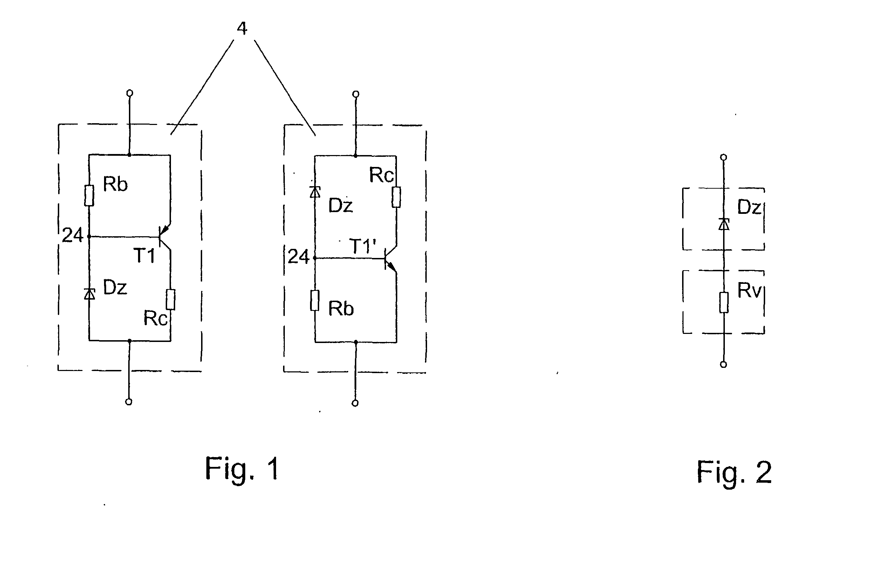

In Fig. 1 ist in zwei Varianten schematisch eine Spannungs-Detektoreinrichtung 4 dargestellt. Die Spannungs-Detektoreinrichtung 4, die auch Kernzelle 4 genannt wird, besteht im Wesentlichen aus einer Parallelschaltung, in deren einem Zweig ein Transistor T1 und ein dazu in Reihe liegender Kollektorwiderstand Rc liegen. Im anderen Zweig ist eine Zener-Diode Dz und ein Basiswiderstand Rb vorgesehen. Die Basis des Transistors T1 ist auf den Verknüpfungspunkt 24 zwischen Zener-Diode und Basiswiderstand Rb geführt.
Im linken dargestellten Fall ist der Transistor T1 ein bipolarer pnp-Transistor. In der rechts dargestellten Variante ist ein npn-Transistor T1' vorgesehen. Anstelle von bipolaren Transistoren können auch FET's eingesetzt werden.

Fig. 2 zeigt ein Beispiel einer Erweiterungszelle für die in Fig. 1 dargestellten Varianten einer Kernzelle. Die Erweiterungszelle besteht im Beispiel aus einer Z-Diode Dz sowie einem dazu in Reihe geschalteten Widerstand Rv.

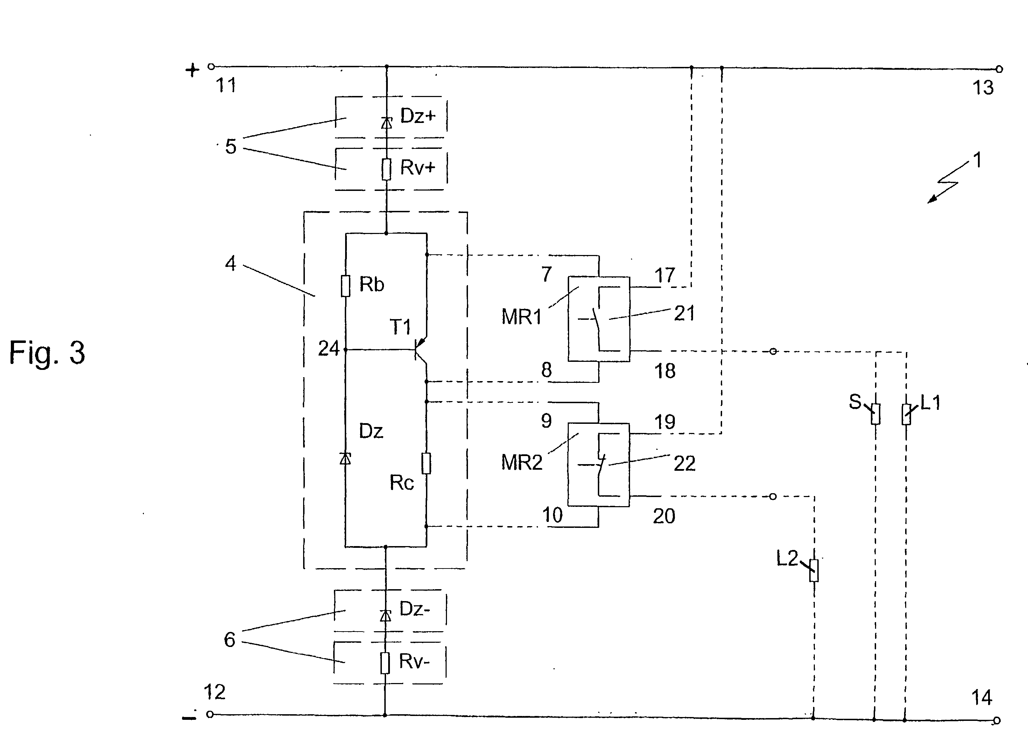

In Figur 3 ist schematisch eine erfindungsgemäße Schutzschaltung in mehreren Varianten dargestellt. Die Schutzschaltung 1 weist eine Kernzelle 4 mit einem pnp-Transistor T1 sowie zwei Erweiterungszellen 5, 6 mit Z-Dioden Dz+ bzw. Dz- und Widerständen Rv+ und Rv- auf. Die Kernzelle 4 ist über die Erweiterungszellen 5, 6 mit einer positiven bzw. einer negativen Versorgungsspannung 11 bzw. 12 verbunden.

Als schneller Schalter wird in einer ersten vorteilhaften Variante der Schutzschaltung 1 ein Mikro-Relais MR1 als Schließer vorgesehen. Dieses Mikro-Relais MR1 liegt einerseits mit seinem einen Eingang 7 am Emitter des Transistors T1 und mit seinem anderen Eingang 8 am Kollektor des Transistors T1. Der schaltbare Ausgang 17 liegt am Eingangsanschluss 11 der Schutzschaltung 1, während der andere Ausgang 18 des Mikro-Relais MR1 zur zu schützenden Einrichtung L1, S führt. Die zu schützende Einrichtung ist bei der ersten Variante von Fig. 3 beispielhaft als Last L1 mit Spannungs- und Strombegrenzungseinrichtung als Sicherungseinrichtung S dargestellt. Sowohl Last L1 als auch die Sicherungseinrichtung S liegen mit ihrem jeweils anderen Anschluss auf dem Anschluss 14 der Schutzschaltung.

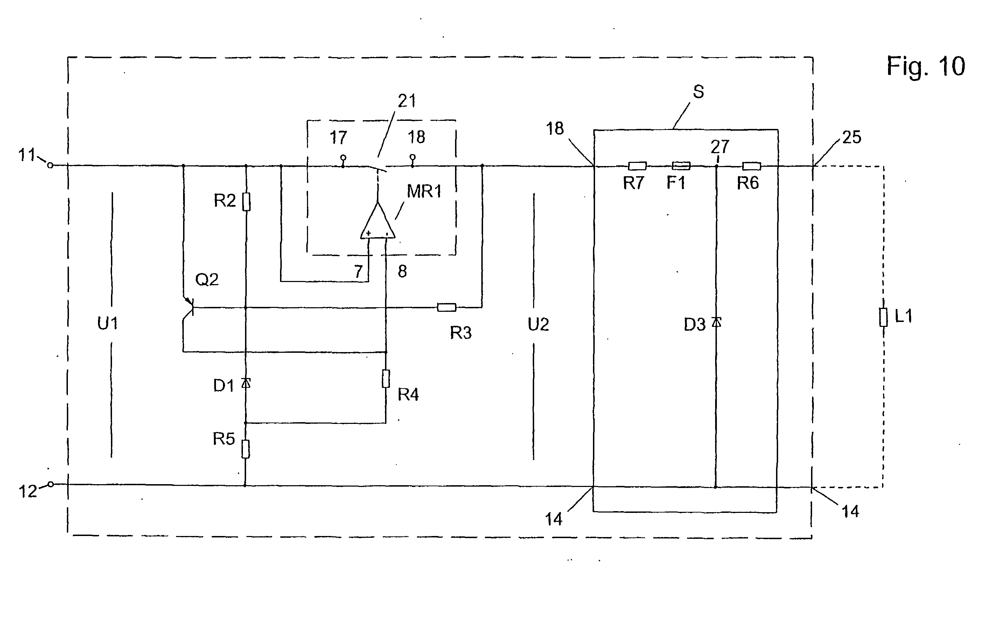

Die in der Fig. 3 schematisch dargestellte Sicherungseinrichtung S kann eine Zener-Barriere sein mit einer Sicherung im seriellen Zweig zur Last L1, wie dies auch in der nachfolgenden Fig. 10 dargestellt ist.

Im Standardfall werden die beiden Dioden Dz+, Dz- und einer der beiden Widerstände Rv+, Rv- durch Brücken ersetzt, so dass der erste Anschluss der Kernzelle 4 direkt oder über Rv+ mit 11,13 verbunden ist. Der andere Anschluss der Kernzelle 4 führt dann entweder direkt oder über Rv- auf die Leitung 12, 14.

In der Funktionsweise wird in der vorausgehend dargelegten Beschaltung nach Fig. 3 die zu schützende Einrichtung bei einer auftretenden Überspannung mit so geringer Verzögerung durch das Mikro-Relais MR1 abgeschaltet, dass in der kurzen Phase des Abschaltens die noch auf die zu schützende Einrichtung übertragene Energie nicht ausreicht, um Elemente der zu schützenden Einrichtung S, L1 zu beschädigen.

Im Normalbetrieb ist der Transistor T1 nichtleitend bzw. gesperrt und der Schalter 21 des Mikro-Relais MR1 ist geschlossen. An den Eingangsanschlüssen 11, 12 liegt die Versorgungsspannung bzw. Spannung für die zu schützende Einrichtung an, da der Schalter 21 des Mikro-Relais MR1 geschlossen ist.

Würde daher eine Spannungsspitze an die Eingangsanschlüsse 11, 12 gelangen, so würde abhängig von der Spannung der Zener-Diode Dz diese leitend werden und durch den Stromfluss im Knotenpunkt 24 das Durchschalten des Transistors T1 herbeiführen.

Aufgrund der an den Anschlüssen 7 und 8 des Mikro-Relais MR1 abgeschalteten Spannung würde daher der Schalter 21 öffnen, womit ein flinkes Abschalten der zu schützenden Einrichtung S, L1 bei Überspannung erreicht wird. Die zu schützende Einrichtung wird daher auf diese Weise vor einer Überspannung geschützt, wobei auch das Ansprechen einer Sicherung bereits durch das schnelle Öffnen des Mikro-Relais MR1 verhindert werden kann.

In der Fig. 3 ist weiterhin ein Ausbau der aus Kernzelle 4 und Mikro-Relais MR1, MR2 bestehenden Grundschaltung mittels Erweiterungszellen 5, 6 dargestellt.
Die Erweiterungszelle 5 besteht im Beispiel nach Fig. 3 aus einer weiteren Zener-Diode Dz und einem in Serie dazu liegenden Vorwiderstand Rv. Diese können auch einzeln oder in Kombination als Erweiterungszelle, z.B. seriell zur Kernzelle 4 gegenüber dem positiven Eingangsanschluss 11 und/oder als Erweiterungszelle 6 gegenüber dem anderen Eingangsanschluss 12 vorgesehen sein.

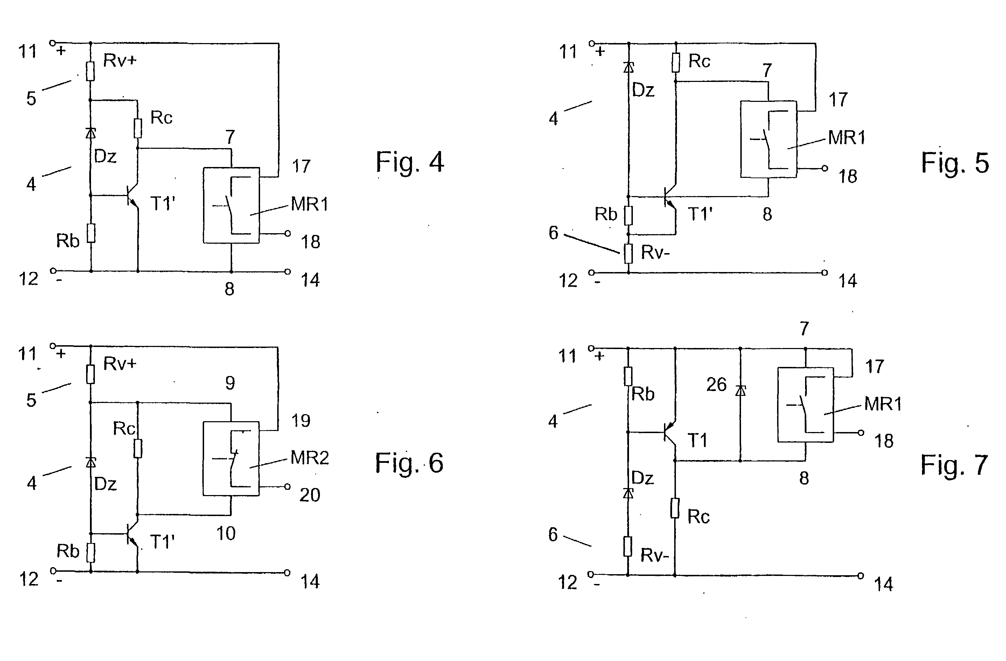

Durch eine derartige Erweiterungszelle 5 bzw. 6 kann der Strom begrenzt werden, der durch die Kernzelle 4 fließt. Es kann aber auch sozusagen eine Justierung der Einsatzspannung der Kernzelle 4 damit erreicht werden. In der Kernzelle 4 kann weiterhin eine Z-Diode 26 vorgesehen sein, welche die Funktion eines Eingangsüberspannungsschutzes für das Mikro-Relais MR1 übernimmt (siehe Fig. 7).

Bei der weiteren in Fig. 3 dargestellten Variante der Schutzschaltung 1 wird gedanklich das Mikro-Relais MR2 als Öffner vorgesehen.
Die flinke Abschaltfunktion im Falle einer Überspannung wird durch das Mikro-Relais MR2 realisiert. Dieses Mikro-Relais MR2 liegt mit seinen Eingangsanschlüssen, 9, 10 parallel zum Kollektorwiderstand Rc der vorausgehend beschriebenen Kernzelle 4. Das Mikro-Relais MR2 ist im vorliegenden Fall als "Öffner" mit einem Schalter 22 ausgebildet, der im Normalbetrieb geschlossen ist, da über den Widerstand Rc keine ausreichende Steuerspannung zur Verfügung steht.

Das Mikro-Relais MR2 liegt mit seinem Ausgangsanschluss 19 am Eingangsanschluss 11 der Versorgungsspannung und mit seinem weiteren Ausgangsanschluss 20 an der zu schützenden Einrichtung L2, die am Anschluss 12 der Schutzschaltung 1 liegt.

Gelangt eine Überspannung an die Eingangsanschlüsse 11, 12, so wird wieder, wie oben, die Z-Diode Dz in Abhängigkeit der anliegenden Spannung leitend werden und durch den Stromfluss im Knotenpunkt 24 das Durchschalten des Transistors T1 herbeiführen. Aufgrund dessen würde im Kollektor-Emitter-Kreis von T1 ein Strom fließen, der einen Spannungsabfall an Rc verursacht. Dieser Spannungsabfall am Kollektorwiderstand Rc, der an den Anschlüssen 9, 10 des Mikro-Relais MR2 liegt, bewirkt ein Öffnen des Schalters 22 und damit ein Abtrennen der zu schützenden Einrichtung L2.

Aufgrund der äußerst kurzen Ansprechzeit bzw. Anzugsverzögerung, des hohen Eingangswiderstandes, der geringen Leistungsaufnahme, der hohen Schaltfrequenz und der galvanischen Trennung von Steuer- und Lastkreis, eignet sich daher ein derartiges Mikro-Relais MR1 bzw. MR2 in hervorragender weise als Sicherungsschalter, insbesondere bei Überspannungen, zumal nach dem Öffnen des Schalters eine galvanische Trennung an den Anschlüssen zur Last vorhanden ist.

Der Ansprechwert für eine zu detektierende Überspannung wird von der Z-Diode festgelegt. Liegt jedoch die Ansprechspannung des Mikro-Relais über der zur Verfügung stehenden Eingangsspannung an 11, 12, kann das Mikro-Relais ohne zusätzliche Maßnahmen nicht angesteuert werden.

Zum Erreichen sehr niedriger Ansprechpegel kann es daher zweckmäßig sein, dem Mikro-Relais MR1 bzw. MR2 einen Spannungswandler vorzuschalten, der den niedrigen Pegel auf einen entsprechenden Einsatzspannungspegel transformiert. Der Spannungswandler selbst kann hierbei in idealer Weise als interne Ladungspumpe im Mikro-Relais ausgebildet sein.

Wie die Varianten des Ausführungsbeispieles nach Fig. 3 zeigen, kann je nach vorhandener Ausführung des Mikro-Relais als "Öffner" bzw. "Schließer", allein durch das passende Einfügen des Mikro-Relais in die Schutzschaltung 1 ein Abtrennen erzielt werden. Aufgrund des hohen Eingangswiderstandes muss das Mikro-Relais nicht als Arbeitswiderstand berücksichtigt werden, sondern kann im Wesentlichen parallel zu vorhandenen Bauelementen der Kernzelle 4 an nahezu jeder geeigneten Stelle als Schaltelement hinzugefügt werden.

Da die Kernzelle 4 nach der Fig. 3 zusammen mit den Erweiterungszellen 5, 6 verschieden variiert werden kann, sind in den nachfolgenden Figuren 4 bis 8 einige Ausführungsbeispiele zusammen mit der entsprechenden Anschlusslage des Mikro-Relais MR1 bzw. MR2 dargestellt.

In Fig. 4 besteht die Kernzelle 4 aus der Zener-Diode Dz in Serie zum Basiswiderstand Rb. Im parallel liegenden Zweig ist in Fig. 4 ein npn-Transistor T1' und ein Kollektorwiderstand Rc vorgesehen. Als Erweiterungszelle 5 ist ein Vorwiderstand Rv gegenüber dem Eingangsanschluss 11 vorhanden.

Das Mikro-Relais MR1, das im Beispiel nach Fig. 4 ein "Schließer" ist, liegt mit seinem Anschluss 7 am Kollektor des Transistors T1' und mit seinem anderen Anschluss 8 am Eingangsanschluss 12 bzw. am Anschluss 14. Der Ausgang 17 des Mikro-Relais MR1 liegt am Anschluss 11. Der andere Ausgang 18 ist für den Anschluss einer zu schützenden Einrichtung L1, gegebenenfalls zusammen mit einer Sicherungseinrichtung S vorgesehen, die mit ihren anderen Anschlüssen am Ausgang 14 liegen würden.

Im Normalfall ist das Mikro-Relais MR1 geschlossen, so dass die entsprechende Versorgungsspannung an den Anschlüssen 18, 14 zur zu schützenden Einrichtung liegt. Gelangt eine Überspannung auf die Anschlüsse 11, 12, so schaltet der Transistor T1' durch. Das Mikro-Relais MR1 öffnet und schaltet damit die entsprechende zu schützende Einrichtung bzw. die vorgeschaltete Sicherungseinrichtung S1 (Fig. 1) in kürzester Zeit ab, so dass eine Beschädigung der an den Anschlüssen 18, 14 liegenden Verbraucher vermieden wird.

Es ist auch eine Ausführungsform denkbar, bei der die zu schützende Einrichtung L1, S1 mit ihrem einen Anschluss am Anschluss 11 liegt und mit ihrem anderen Anschluss mit dem Ausgang 17 des Mikro-Relais MR1 verbunden ist. Der Anschluss 18 des Mikro-Relais MR1 wäre dann mit der Leitung 12, 14 verbunden.

Ein weiteres vorteilhaftes Beispiel ist in Fig. 5 dargestellt. Die Kernzelle besteht aus der Zener-Diode Dz und dem in Reihe liegenden Basiswiderstand Rb, dem ein Vorwiderstand Rv als Erweiterungszelle 6 gegenüber dem Eingangsanschluss 12 nachgeschaltet ist.

Der zweite Zweig der Kernzelle 4 weist einen npn-Transistor T1' auf, dessen Kollektor über den Kollektorwiderstand Rc am Eingang 11 liegt. Der Emitter des Transistors T1' liegt am Verbindungspunkt zu dem Basiswiderstand Rb und dem Vorwiderstand Rv. Die Basis liegt am Knotenpunkt zwischen der Zener-Diode Dz und dem Widerstand Rb. Das als "Schließer" ausgebildete Mikro-Relais MR1 liegt mit seinem Anschluss 7 am Kollektor und mit seinem Anschluss 8 an der Basis des Transistors T1'. Der Ausgangsanschluss 17 liegt auf dem Eingang 11. Der andere Ausgangsanschluss 18 dient als Anschlusspunkt für die zu schützende Einrichtung, die mit ihrem weiteren Anschluss am Ausgang 14 liegt.

In vergleichbarer Weise besteht der Schutz gegen eine Überspannung darin, dass beim Auftreten einer solchen das Mikro-Relais MR1 öffnet und dadurch die nachfolgende Last abschaltet.

In Fig. 6 ist die Schutzschaltung mit einem Mikro-Relais MR2 als "Öffner" dargestellt. Die Kernzelle 4 besteht aus einer Zener-Diode Dz und einem Basiswiderstand Rb in einem Zweig. Im anderen Zweig ist ein npn-Transistor T1' mit einem Kollektorwiderstand Rc vorgesehen. Diese Kernzelle 4 liegt über einem Vorwiderstand Rv am Eingangsanschluss 11. Der Basiswiederstand Rb und der Emitter des Transistors T1' sind auf den Eingangsanschluss 12 bzw. den Ausgang 14 gelegt.

Der Anschluss 9 des Mikro-Relais MR2 liegt am Kollektorwiderstand Rc bzw. dem Vorwiderstand Rv. Der andere Anschluss 10 liegt am Kollektor. Der erste Ausgang 19 des Mikro-Relais MR2 liegt am Eingangsanschluss 11. Der zweite Ausgang 20 des Mikro-Relais MR2 dient als Anschlusspunkt für einen Verbraucher, der mit seinem anderen Anschluss am Ausgang 14 liegen würde. Im Falle des Auftretens einer Überspannung an den Eingangsanschlüssen 11, 12 fließt über die Zener-Diode Dz ein Strom an die Basis des Transistors T1', der durchschaltet, so dass das am Kollektorwiderstand Rc abfallende Potenzial auf die Anschlüsse 9, 10 des Mikro-Relais MR2 gelangt, das unverzüglich öffnet und damit den an den Anschlussklemmen 20, 14 liegenden Verbraucher abtrennt und schützt.

Im Beispiel nach Fig. 7 ist eine weitere Beschaltungsmöglichkeit mit einem als "Schließer" dargestellen Mikro-Relais MR1 gezeigt. Die Kernzelle 4 ist geringfügig modifiziert ausgelegt, wobei im linken parallelen Zweig ein Baswiswiderstand Rb in Serie zu einer Zener-Diode Dz liegt.

Nachgeschaltet zu dieser Zener-Diode Dz ist ein Vorwiderstand Rv im Sinne einer Erweiterungszelle 6 gegenüber dem Eingangsanschluss 12 mit negativem Potenzial. Im rechten Zweig liegt ein pnp-Transistor T1 mit seinem Emitter am Eingangsanschluss 11 und mit seinem Kollektor über einen Kollektorwiderstand Rc am Eingang 12 bzw. am Ausgangsanschluss 14.

Das Mikro-Relais MR1 liegt mit einem Anschluss 7 am Eingangsanschluss 11 und mit seinem anderen Anschluss 8 am Kollektor des Transistors T1. Der Ausgang 17 des Mikro-Relais MR1 liegt ebenfalls am Eingangsanschluss 11 der Versorgungsspannung, während der andere Anschluss 18 zu einem nicht dargestellten Verbraucher führt, der mit seinem anderen Anschluss an der Ausgangsklemme 14 liegen würde. Zum Eigenschutz des Mikro-Relais MR1 gegen eine zu hohe Steuerspannung ist parallel zum Mikro-Relais MR1 bzw. zur Emitter-Kollektor-Strecke des Transistors T1 eine Zener-Diode 26 mit ihrer Anode am Kollektor bzw. dem Anschluss 8 des Mikro-Relais MR1 und mit ihrer Kathode am Eingangsanschluss 11 vorgesehen. Mit dieser Beschaltung wird somit einerseits ein angeschlossener Verbraucher bzw. eine Sicherungseinrichtung durch ein Öffnen des Mikro-Relais MR1 bei Überspannung geschützt. Gleichzeitig würde bei zu hoher Spannung auch das Mikro-Relais MR1 durch die Zener-Diode 26 geschützt, da diese in einem derartigen Fall die Steuerspannung begrenzen würde.

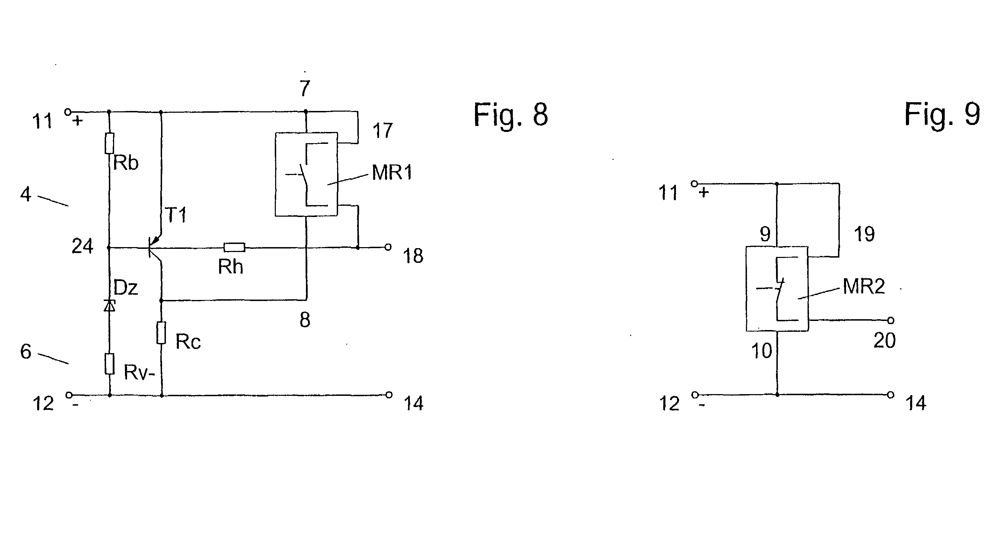

Eine Schaltungsauslegung mit einer Rückkopplung des am Ausgang 18 des Mikro-Relais MR1 liegenden Potenzials auf die Basis bzw. den Knotenpunkt 24 des Transistors T1 ist in Fig. 8 dargestellt. Die Kernzelle 4 mit der Erweiterungszelle 6 entspricht dabei der Ausführungsform nach Fig. 3. Der Ausgang 18 des als "Schließer" ausgebildeten Mikro-Relais MR1 ist im Beispiel nach Fig. 8 über einen Hysterese-Widerstand Rh auf den Knotenpunkt 24 zurückgekoppelt. Mittels dieser Rückkopplung des am Ausgang 18 anliegenden Potenzials, das auch dem Verbraucher zuführt wird, erreicht man ein stabiles Abschalten des Mikro-Relais MR1 bis hin zur Selbsthaltung. Die Hysteresefunktion ist jedoch nur bei angeschlossenem Verbraucher mit vorgeschalteter Z-Barriere als Spannungs- und Strombegrenzungseinrichtung gegeben.

Aufgrund des Aufbaus und des Schaltverhaltens des Mikro-Relais bietet sich hierbei der Vorteil, dass im Falle der Auslegung als "Öffner", wie es in Fig. 9 dargestellt ist, das Mikro-Relais MR2 als Schutzschaltung ohne weiteren Bauteileaufwand eingesetzt werden kann. Voraussetzung ist hierbei jedoch, dass die an den Anschlüssen 9 und 10 auftretende Einsatzspannung bzw. Überspannung, vor der der nachfolgende Verbraucher an den Klemmen 20, 14 geschützt werden soll, der Einsatzspannung des Mikro-Relais MR2 entspricht. Im Beispiel nach Fig. 9 liegt der Anschluss 9 und der Ausgangsanschluss 19 des Mikro-Relais MR2 auf dem Eingangsanschluss 11. Der Ausgang 10 liegt am Eingangsanschluss 12 bzw. am Ausgangsanschluss 14.

Ein zu schützender Verbraucher bzw. eine Sicherungseinrichtung S entsprechend Fig. 3 würde dementsprechend zwischen den Klemmen 20, 14 angeschlossen sein. Gelangt im Beispiel nach Fig. 9 eine Überspannung an das Mikro-Relais MR2, so trennt das Mikro-Relais mit äußerst kurzer Schaltzeit über seinen Schalter die Anschlüsse 19, 20 und schützt dementsprechend den nachfolgenden Verbraucher vor der Überspannung.

Aufgrund des Aufbaus des Mikro-Relais auf der Basis von Halbleitermaterialien auch in integrierter Form, ist es auch möglich, die Kernzelle 4 und die Erweiterungszellen 5, 6 in der Art eines Halbleiter-Chips in das Mikro-Relais selbst zu integrieren. Auf diese Weise ist es möglich die Schutzschaltung in Form eines einzigen Bauelementes bzw. eines Chips in der entsprechenden Schaltung vorzusehen. Erfindungsgemäß kann außerdem ein Vierpol-Modul vorgesehen sein, bei dem das Mikro-Relais mit seinen Steuereingängen entweder mit dem Signalausgang, zum Beispiel dem Ausgangssignal einer Schaltstufe, und der positiven Bezugsspannung oder mit dem Signalausgang und der negativen Bezugsspannung verbunden ist. Auf diese Weise wird ohne Bauteileaufwand die Wirkungsrichtung wählbar.

In Fig. 10 ist in detaillierterer Form der Aufbau einer Schutzschaltung zum Schutz der nicht auswechselbaren Sicherung F1 der stilisierten Z-Barriere, wie sie vorausgehend anhand einer Kernzelle und Erweiterungszellen in der Beschaltung mit einem Mikro-Relais dargelegt worden ist, dargestellt. Der Aufbau mit einer nachfolgenden Sicherheitseinrichtung S, die als Zener-Barriere dargestellt ist, und dem nachfolgenden Verbraucher L1 entspricht im Wesentlichen der älteren Anmeldung WO 00/62394 der Anmelderin, bei der jedoch herkömmliche Schaltelemente verwendet werden.

Die in Fig. 10 gezeigte Schutzschaltung zwischen den Anschlussklemmen 11, 12 und 18, 14, entspricht hierbei im Wesentlichen der Ausführungsform nach der Fig. 8. Zwischen dem Eingangsanschluss 11 und dem Eingangsanschluss 12 liegt in Reihe ein Widerstand R2, dem eine Zener-Diode D1 nachgeschaltet ist, sowie ein weiterer Widerstand R5. Ein bipolarer Transistor Q2 liegt mit seinem Emitter am Eingang 11 und mit seinem Kollektor über einen Widerstand R4 und einen Widerstand R5 am Eingangsanschluss 12.

Die Basis des Transistors Q2 ist über einen Rückkoppelwiderstand R3 auf die Klemme 18 gelegt. Die Basis liegt gleichzeitig am Potenzial zwischen Widerstand R2 und der Kathode der Zener-Diode D1.

Die zu schützende Einrichtung besteht hier aus dem Verbraucher L1 und/oder einer als Z-Barriere ausgebildeten, vorgeschalteten Sicherheitseinrichtung S. Zum Schutz von Verbraucher L1 und Z-Barriere S ist zwischen den Klemmen 11, 18 der Schalter 21 eines Mikro-Relais MR1 vorgesehen. Das Mikro-Relais MR1 liegt mit einem Eingangsausschuss 7 am Eingang 11 und mit seinem anderen Eingang 8 am Kollektor des Transistors Q2 und dem Widerstand R4. Im Normalbetrieb ist bei anliegender üblicher Versorgungsspannung der Schalter 21 des Mikro-Relais MR1 geschlossen, so dass diese Spannung auf die nachfolgende Sicherheitseinrichtung S gegeben wird.

Die als Z-Barriere ausgebildete Sicherheitseinrichtung S ist in Fig. 10 nur schematisch dargestellt. Insbesondere soll die gezeigte Schaltung keine genehmigungsfähige Z-Barriere darstellen. Die Sicherheitseinrichtung S weist im vorliegenden Fall im seriellen Zweig zwischen den Anschlusspunkten 18, 25 einen Widerstand R7 mit einer nachfolgenden Sicherung F1, die als Schmelzsicherung ausgelegt ist, und einen weiteren Widerstand R6 auf. Am Knotenpunkt 27 zwischen der Sicherung F1 und Widerstand R6 liegt die Kathode einer Zener-Diode D3, die mit ihrer Anode auf dem Anschluss 12 bzw. 14 liegt. Aus sicherheitstechnischen Gründen können auch mehrere Z-Dioden in einer Z-Barriere zusammengeschaltet werden.

Die Sicherheitseinrichtung S mit den Eingangsanschlüssen 18 und 14 und den Ausgangsanschlüssen 25 und 14 hat im dargestellten Beispiel nach Fig. 10 die Funktion, einen an den Anschlüssen 25, 14 liegenden Verbraucher L1 einerseits vor einer Überspannung und andererseits vor einem zu hohen Stromfluss zu schützen.

Die Zener-Diode D3 zwischen den Klemmen 27 und 14 ist so ausgelegt, dass bei Auftreten einer Überspannung die Anschlusspunkte 27, 14 sozusagen auf die Zener-Spannung begrenzt werden. Im Falle eines zu hohen Stromflusses zwischen den Punkten 18 und 25 wäre ein Abschalten bzw. ein Unterbrechen durch die Sicherung F1, als Schmelzsicherung, gegeben.

Da die Schmelzsicherung F1 der Z-Barriere, insbesondere wenn diese im Ex-Bereich angeordnet ist, nicht ausgewechselt werden darf, sondern nach Ansprechen von F1 vielmehr die gesamte Z-Barriere ausgetauscht werden muss, soll ein Ansprechen von F1 möglichst vermieden werden. Zu diesem Zweck ist im Beispiel nach der Fig. 10 auf der Basis der vorausgehenden Anordnungen nach den Figuren 1 bis 9, eine vorgeschaltete Schutzschaltung vorhanden. Die Funktion dieser vorgeschalteten Schutzschaltung ist, insbesondere bei Überspannung aber auch bei einem zu hohen Strom infolge einer Überspannung, ein schnelleres Abschalten der anliegenden Spannung zu ermöglichen, so dass die nachfolgende Sicherungseinrichtung S überhaupt nicht ansprechen muss und daher deren Bauelemente ohne jegliche Beeinträchtigung und damit zur weiteren Sicherheit vorhanden bleiben.

Die Schutzschaltung nach Fig. 10 zwischen den Anschlusspunkten, 11, 12 und 18, 14 führt daher bei der Überspannung folgende Funktion aus. Im Normalbetrieb ist der Schalter 21 des Mikro-Relais MR1 zwischen den Punkten 17, 18 geschlossen. Der Transistor Q2 ist gesperrt, so dass an den Anschlüssen 7, 8 des Mikro-Relais MR1 Steuerspannung anliegt und der Schalter 21 geschlossen ist.

Gelangt nun eine Überspannung an die Anschlüsse 11, 12, so erfolgt ein Stromfluss über die Zener-Diode D1 und die seriell dazu liegenden Widerstände R5 und R2. Es gelangt somit ein Spannungspotenzial an die Basis des Transistors Q2, das diesen Transistor Q2 durchsteuert. Die an den Anschlüssen 7, 8 des Mikro-Relais MR1 liegende Ansteuerspannung wird abgeschaltet, so dass der Schalter 21 geöffnet wird und damit die Abschaltung der nachfolgenden Sicherungseinrichtung S und der Last L1 bewirkt wird. Außerdem ist durch die Schaltung auch die an den Eingangsanschlüssen 7, 8 des Mikro-Relais MR1 anliegende Spannung begrenzt, so dass das Mikro-Relais vor Überspannung geschützt ist.

Die vorgeschaltete Schutzschaltung mit Mikro-Relais ermöglicht daher einerseits in vorteilhafter Weise den Schutz der nachfolgenden Verbraucher, der Sicherheitseinrichtung S und der Last L1 vor Überspannung und zu hohen Strömen. Andererseits wird die Abschaltung durch konkrete galvanische Trennung verbessert und die Vielzahl der Auslegung der vorgeschalteten Schutzschaltung, wie es auch in den vorausgegangenen Figuren 1 bis 9 gezeigt ist, wird erheblich erweitert.

## Patentansprüche

1. Schutzschaltung (1) zur Spannungsbegrenzung für eine zu schützende Einrichtung mit:
je einem Eingangs- (11) und einem Ausgangsanschluss (18, 20),
einer gemeinsamen Leitung (12, 14) und
einer zwischen Eingangsanschluss (11) und gemeinsamer Leitung (12, 14) geschalteten Spannungs-Detektoreinrichtung (4),
wobei die zu schützende Einrichtung in einem Ausgangskreis der Schutzschaltung vorgesehen ist und mittels einer steuerbaren Schalteinrichtung abtrennbar ist, die seriell zwischen dem Eingangsanschluss (11) und dem Ausgangsanschluss (18, 20) vorgesehen ist, und
wobei die Spannungs-Detektoreinrichtung in Wirkverbindung mit der steuerbaren Schalteinrichtung steht,
**dadurch gekennzeichnet,**
**dass** die Schalteinrichtung ein mikro-mechanisches Bauteil ist, welches
einen Steuerkreis mit einem hohen Eingangswiderstand und einen vom Steuerkreis galvanisch getrennten Ausgangskreis aufweist, der über den Steuerkreis schaltbar ist,
wobei der Ausgangskreis in geöffnetem Schaltzustand eine galvanische Trennung seiner Ausgangsanschlüsse (17, 18, 19, 20) aufweist.

2. Schutzschaltung (1) nach Anspruch 1,
**dadurch gekennzeichnet,**
**dass** die Spannungs-Detektoreinrichtung (4) einen elektronischen Schalter (T1) und eine Spannungsfühler-Einrichtung (Dz) aufweist,
wobei der Steueranschluss des elektronischen Schalter (T1) mit der Spannungsfühler-Einrichtung (Dz) in elektrischer Wirkverbindung und
der Steuerkreis des mikro-mechanischen Bauteils (MR1; MR2) mit dem elektronischen Schalter (T1) in elektrischer Wirkverbindung steht.

3. Schutzschaltung nach Anspruch 2,
**dadurch gekennzeichnet,**
**dass** die Spannungsfühler-Einrichtung (Dz) eine Spannungsfühler-Diode (Dz), insbesondere eine Zener-Diode, und der elektronische Schalter ein Transistor (T1) ist.

4. Schutzschaltung nach Anspruch 3,
**dadurch gekennzeichnet,**
**dass** der Steuerkreis des mikro-mechanischen Bauteils (MR1) parallel zur Kollektor-Emitter-Strecke bzw. parallel zur Source-Drain-Strecke des Transistors (T1) angeordnet ist.

5. Schutzschaltung nach einem der Ansprüche 2 bis 4,
**dadurch gekennzeichnet,**
**dass** dem steuerbaren Schalter (T1) mindestens ein Arbeitswiderstand (Rc) und der Spannungsfühler-Diode (Dz) mindestens ein Widerstand (Rb) zugeordnet ist und
**dass** der Steueranschluss des steuerbaren Schalters (T1) mit dem Widerstand (Rb) und der Spannungsfühler-Diode (Dz) in Wirkverbindung steht.

6. Schutzschaltung nach Anspruch 5,
**dadurch gekennzeichnet,**
**dass** der Steuerkreis des mikro-mechanischen Bauteils (MR2) parallel zum Arbeitswiderstand (Rc) liegt.

7. Schutzschaltung nach einem der Ansprüche 4 bis 6,
**dadurch gekennzeichnet,**
**dass** der Steuerkreis des mikro-mechanischen Bauteils (MR1) mit der Basis bzw. dem Gate sowie mit dem Kollektor bzw. dem Drain des Transistors (T1) verbunden ist.

8. Schutzschaltung nach einem der Ansprüche 1 bis 7,
**dadurch gekennzeichnet,**
**dass** die Spannungs-Detektoreinrichtung als Kernzelle (4) vorgesehen ist und eine erste Einstell-Einrichtung (5) zwischen der Kernzelle (4) und dem positiven Anschluss (11) der Versorgungsspannung und/oder eine zweite Einstell-Einrichtung (6) zwischen der Kernzelle (4) und dem negativen Anschluss (12) der Versorgungsspannung vorgesehen ist.

9. Schutzschaltung nach einem der Ansprüche 8 bis 11,
**dadurch gekennzeichnet,**
**dass** die Einstell-Einrichtung (5; 6) mindestens einen Vorwiderstand (Rv) oder eine Serienschaltung aus einem Vorwiderstand (Rv) und einer Zener-Diode(Dz) aufweist.

10. Schutzschaltung nach einem der Ansprüche 1 bis 9,
**dadurch gekennzeichnet,**
**dass** das mikro-mechanische Bauteils als Mikro-Relais (MR) mit Schließer-Funktion ausgebildet ist.

11. Schutzschaltung nach Anspruch 10,
**dadurch gekennzeichnet,**
**dass** der Steuerkreis (7, 8) eines als Schließer ausgebildeten Mikro-Relais (MR1) an der Emitter-Kollektor-Strecke des Transistors (T1) liegt.

12. Schutzschaltung nach einem der Ansprüche 1 bis 9,
**dadurch gekennzeichnet,**
**dass** das mikro-mechanische Bauteil als Mikro-Relais (MR) mit Öffner-Funktion ausgebildet ist.

13. Schutzschaltung nach einem der Ansprüche 10 bis 12,
**dadurch gekennzeichnet,**
**dass** das Mikro-Relais (MR1) mit einem Ausgangsanschluss (17) direkt oder indirekt am positiven oder negativen Versorgungsspannungsanschluss (11; 12) und mit dem anderen Anschluss (18) direkt oder indirekt an der zu schützenden Einrichtung liegt.

14. Schutzschaltung nach einem der Ansprüche 10 bis 13,
**dadurch gekennzeichnet,**
**dass** das Mikro-Relais (MR1) die an seinen Eingangsanschlüssen (9, 10) anliegende Spannung detektiert und dass bei auftretender Überspannung das Mikro-Relais (MR1) seinen Schaltzustand abrupt ändert.

15. Schutzschaltung nach einem der Ansprüche 10 bis 14,
**dadurch gekennzeichnet,**
**dass** dem Mikro-Relais (MR1) zur Spannungs- und/oder Strombegrenzung elektrische Bauelemente (4, 5, 6, 16) vorgeschaltet oder parallelgeschaltet sind oder
**dass** diese elektrischen Bauelemente im Mikro-Relais (MR1) integriert sind.

16. Schutzschaltung nach einem der Ansprüche 1 bis 15,
**dadurch gekennzeichnet,**
**dass** die zu schützende Einrichtung ein Verbraucher (L1) mit vorgeschalteter Spannungs- und Strombegrenzungseinrichtung (S) ist.

17. Schutzschaltung nach Anspruch 16,
**dadurch gekennzeichnet,**
**dass** die dem Verbraucher (L1) vorgeschaltete Spannungs- und Strombegrenzungseinrichtung (S) eine Zener-Barriere (D3) ist.

18. Schutzschaltung nach einem der Ansprüche 2 bis 17,
**dadurch gekennzeichnet,**
**dass** die Spannungsfühlereinrichtung (Dz) als Leistungsfühler oder als Temperaturfühler ausgelegt ist.

## Claims

1. Protective circuit (1) for limiting the voltage for a device to be protected, having:
in each case an input terminal (11) and an output terminal (18, 20),
a common line (12, 14) and
a voltage detector (4) connected between the input terminal (11) and the common line (12, 14),
in which the device to be protected is located in an output circuit of the protective circuit and is separable by means of a controllable switching device provided in serial manner between the input terminal (11) and the output terminal (18, 20) and
in which the voltage detector device is in operative connection with the controllable switching device,
**characterized in that**
the switching device is a micromechanical component, which has a control circuit with a high input resistance and an output circuit galvanically separated from the control circuit and switchable via the control circuit,
in which the output circuit in the opened switching state has a galvanic separation of its output terminals (17, 18, 19, 20).

2. Protective circuit (1) according to claim 1,
**characterized in that**
the voltage detector device (4) has an electronic switch (T1) and a voltage sensor device (Dz),
in which the control terminal of the electronic switch (T1) is in electrical operative connection with the voltage sensor device (Dz) and
the control circuit of the micromechanical component (MR1; MR2) is in electrical operative connection with the electronic switch (T1).

3. Protective circuit according to claim 2,
**characterized in that**
the voltage sensor device (Dz) is a voltage sensor diode (Dz), particularly a Zener diode, and the electronic switch is a transistor (T1).

4. Protective circuit according to claim 3,
**characterized in that**
the control circuit of the micromechanical component (MR1) is arranged in parallel manner to the collector-emitter path or to the source-drain path of the transistor (T1).

5. Protective circuit according to one of the claims 2 to 4,
**characterized in that**
with the controllable switch (T1) is associated at least an operating resistor (Rc) and with the voltage sensor diode (Dz) at least a resistor (Rb) and
that the control terminal of the controllable switch (T1) is in operative connection with the resistor (Rb) and the voltage sensor diode (Dz).

6. Protective circuit according to claim 5,
**characterized in that**
the control circuit of the micromechanical component (MR2) is parallel to the operating resistor (Rc).

7. Protective circuit according to one of the claims 4 to 6,
**characterized in that**
the control circuit of the micromechanical component (MR1) is connected to the base or gate and to the collector or drain of the transistor (T1), respectively.

8. Protective circuit according to one of the claims 1 to 7,
**characterized in that**
the voltage detector device is provided in the form of a core cell (4) and there is a first adjusting device (5) between the core cell (4) and the positive terminal (11) for the supply voltage and/or a second adjusting device (6) between the core cell (4) and the negative terminal (12) for the supply voltage.

9. Protective circuit according to one of the claims 8 to 11,
**characterized in that**
the adjusting device (5; 6) has at least a series resistor (Rv) or a series connection comprising a series resistor (Rv) and a Zener diode (Dz).

10. Protective circuit according to one of the claims 1 to 9,
**characterized in that**
the micromechanical component is constructed as a microrelay (MR) with a normally open contact function.

11. Protective circuit according to claim 10,
**characterized in that**
the control circuit (7, 8) of a microrelay (MR1) constructed as a normally open contact is at the emitter-collector path of the transistor (T1).

12. Protective circuit according to one of the claims 1 to 9,
**characterized in that**
the micromechanical component is constructed as a microrelay (MR) with a normally closed contact function.

13. Protective circuit according to one of the claims 10 to 12,
**characterized in that**
the microrelay (MR1) with an output terminal (17) is directly or indirectly present at the positive or negative supply voltage terminal (11; 12) and with the other terminal (18) directly or indirectly at the device to be protected.

14. Protective circuit according to one of the claims 10 to 13,
**characterized in that**
the microrelay (MR1) detects the voltage at its input terminals (9, 10) and if an overvoltage occurs the microrelay (MR1) abruptly changes its switching state.

15. Protective circuit according to one of the claims 10 to 14,
**characterized in that**
electrical components (4, 5, 6, 16) are connected upstream or in parallel with the microrelay (MR1) for voltage and/or current limiting or
said electrical components are integrated in the microrelay (MR1).

16. Protective circuit according to one of the claims 1 to 15,
**characterized in that**
the device to be protected is a load (L1) with upstream-connected voltage and current limiting device (S).

17. Protective circuit according to claim 16,
**characterized in that**
the voltage and current limiting device (S) connected upstream of the load (L1) is a Zener barrier (D3).

18. Protective circuit according to one of the claims 2 to 17,
**characterized in that**
the voltage sensor device (Dz) is designed as a power sensor or as a temperature sensor.

## Revendications

1. Circuit de protection (1) pour la limitation en tension d'un dispositif à protéger, avec;
un branchement d'entrée (11) et de sortie (18, 20) respectivement,
une ligne commune (12, 14) et
un dispositif (4) détecteur de tension monté entre le branchement d'entrée (11) et la ligne commune (12, 14),
le dispositif à protéger étant prévu dans un circuit de sortie du circuit de protection et étant séparable au moyen d'un dispositif de commutation commandable qui est prévu en série entre le branchement d'entrée (11) et le branchement de sortie (18, 20), et
le dispositif détecteur de tension étant en relation functionelle avec le dispositif de commutation commandable,
***caractérisé en ce que***
le dispositif de commutation est un composant micromécanique qui comporte un circuit de commande à grande résistance d'entrée et un circuit de sortie séparé galvaniquement du circuit de commande et pouvant être commandé par le circuit de commande, le circuit de sortie présentant à l'état de commutation ouvert une séparation galvanique de ses branchements de sortie (17, 18, 19, 20).

2. Circuit de protection (1) selon la revendication 1,
***caractérisé en ce que***
le dispositif (4) détecteur de tension comporte un commutateur électronique (T1) et un dispositif (Dz) détecteur de tension,
le branchement de commande du commutateur électronique (T1) étant en relation électrique functionelle avec le dispositif (Dz) détecteur de tension et
le circuit de commande du composant micromécanique (MR1; MR2) étant en relation électrique functionelle avec le commutateur électronique (T1).

3. Circuit de protection selon la revendication 2,
***caractérisé en ce que***
le dispositif détecteur de tension (Dz) est une diode (Dz) détectrice de tension, en particulier une diode Zener, et le commutateur électronique est un transistor (T1).

4. Circuit de protection selon la revendication 3,
***caractérisé en ce que***
le circuit de commande du composant micromécanique (MR1) est monté en parallèle avec la voie collecteur-émetteur ou avec la voie source-drain du transistor (T1).

5. Circuit de protection selon l'une quelconque des revendications 2 à 4,
***caractérisé en ce qu'***au
commutateur commandable (T1) est associée au moins une résistance de travail (Rc) et à la diode (Dz) détectrice de tension au moins une résistance (Rb), et
***en ce que*** le branchement de commande du commutateur commandable (T1) est en relation functionelle avec la résistance (Rb) et avec la diode (Dz) détectrice de tension.

6. Circuit de protection selon la revendication 5,
***caractérisé en ce que***
le circuit de commande du composant micromécanique (MR2) est en parallèle avec la résistance de travail (Rc).

7. Circuit de protection selon l'une quelconque des revendications 4 à 6,
***caractérisé en ce que***
le circuit de commande du composant micromécanique (MR1) est relié à la base ou à la gate ainsi qu'au collecteur ou au drain du transistor (T1).

8. Circuit de protection selon l'une quelconque des revendications 1 à 7,
***caractérisé en ce que***
le dispositif détecteur de tension est prévu en tant que cellule noyau (4) et un premier dispositif de réglage (5) est prévu entre la cellule noyau (4) et la borne positive (11) de la tension d'alimentation et/ou un deuxième dispositif de réglage (6) est prévu entre la cellule nucléaire (4) et la borne négative (12) de la tension d'alimentation.

9. Circuit de protection selon l'une quelconque des revendications 8 à 11,
***caractérisé en ce que***
le dispositif de réglage (5; 6) comporte au moins une résistance série (Rv) et un circuit série composé d'une résistance série (Rv) et d'une diode Zener (Dz).

10. Circuit de protection selon l'une quelconque des revendications 1 à 9,
***caractérisé en ce que***
le composant micromécanique est conformé en micro-relais (MR) à fonction de fermeture.

11. Circuit de protection selon la revendication 10,
***caractérisé en ce que***
le circuit de commande (7, 8) d'un micro-relais (MR1) conformé en fermoir se trouve sur la voie émetteur-collecteur du transistor (T1).

12. Circuit de protection selon l'une quelconque des revendications 1 à 9,
***caractérisé en ce que*** le composant micromécanique est conformé en micro-relais (MR) à fonction d'ouverture.

13. Circuit de protection selon l'une quelconque des revendications 10 à 12,
***caractérisé en ce que***
le micro-relais (MR1) se raccorde avec un branchement de sortie (17) directement ou indirectement au branchement positif ou négatif de la tension d'alimentation (11; 12) et avec l'autre branchement (18) directement ou indirectement au dispositif à protéger.

14. Circuit de protection selon l'une quelconque des revendications 10 à 13,
***caractérisé en ce que***
le micro-relais (MR1) détecte la tension présente sur ses branchements d'entrée (9, 10) et
***en ce qu***'en cas de surtension, le micro-relais (MR1) modifie subitement son état de commutation.

15. Circuit de protection selon l'une quelconque des revendications 10 à 14,
***caractérisé en ce que***
des composants électriques (4, 5, 6, 16) sont branchés en série ou en parallèle sur le micro-relais (MR1) pour limiter la tension et/ou le courant, ou
***en ce que*** ces composants électriques sont intégrés au micro-relais (MR1).

16. Circuit de protection selon l'une quelconque des revendications 1 à 15,
***caractérisé en ce que***
le dispositif à protéger est un consommateur (L1) précédé d'un dispositif de limitation de tension et de courant (S).

17. Circuit de protection selon la revendication 16,
***caractérisé en ce que***
le dispositif de limitation de tension et de courant (S) précédant le consommateur (L1) est une barrière Zener (D3).

18. Circuit de protection selon l'une quelconque des revendica tions 2 à 17,
***caractérisé en ce que***
le dispositif détecteur de tension (Dz) est conformé en capteur de puissance ou en capteur de température.
